(19) Europäisches Patentamt / European Patent Office / Office européen des brevets

(11) **EP 2 128 653 A2**

(12) **DEMANDE DE BREVET EUROPEEN**

(43) Date de publication:
**02.12.2009 Bulletin 2009/49**

(51) Int Cl.:
**G01V 1/28** (2006.01)

(21) Numéro de dépôt: **09290357.4**

(22) Date de dépôt: **13.05.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.05.2008 FR 0802908**

(71) Demandeur: **IFP**
**92852 Rueil-Malmaison Cédex (FR)**

(72) Inventeur: **Deflandre, Jean-Pierre**
**92500 Rueil-Malmaison (FR)**

(54) **Procédé pour localiser l'origine spatiale d'un évènement sismique se produisant au sein d'une formation souterraine**

(57) On enregistre les temps d'arrivée d'ondes P et S au moyen d'un capteur triaxial sous forme d'un signal sismique, sur lequel on détermine, l'instant $t_P$ de première arrivée de l'onde P et la période $T_P$ de ce signal sismique. Puis, on détermine l'instant $t_S$ de première arrivée de l'onde S en définissant une fenêtre temporelle d'analyse $W$, choisie de façon à ce que l'énergie de l'onde S soit minimale au sein de cette fenêtre W. Ceci permet de déterminer correctement la direction de propagation de l'onde P au moyen d'une analyse de la polarisation du signal sur la fenêtre $W$. On projette alors le signal sismique dans un nouveau repère défini par la direction de propagation de l'onde P et deux autres axes perpendiculaires Np et B. On peut ainsi détecter l'instant $t_S$ de première arrivée de l'onde S dans un plan défini par les axes Np et B. Enfin, on localise l'origine spatiale de l'événement sismique à partir de la direction de propagation de l'onde P et des temps d'arrivée des ondes P et S.

**Fig. 5**

EP 2 128 653 A2

**Description**

La présente invention concerne le domaine du repérage et de la localisation d'événements sismiques ou micro-sismiques dans une zone souterraine.

En particulier l'invention concerne un procédé pour faciliter la discrimination et l'identification d'événements sismiques ou micro-sismiques relatifs à l'exploitation d'une zone souterraine, au moyen par exemple de capteurs permanents.

La méthode selon l'invention est applicable à des zones-réservoirs ou de cavités souterraines en cours d'exploitation utilisées d'une façon générale, soit pour en extraire des fluides, soit pour y injecter des fluides.

La localisation des points d'une zone souterraine, qu'il s'agisse d'une zone-réservoir ou d'une cavité, où se produisent des événements micro-sismiques liés à une activité ayant pour effet de modifier le champ de contraintes, est d'un grand intérêt pour une bonne exploitation de la zone, qu'il s'agisse d'une production de fluides extraits d'un gisement par un ou plusieurs puits, ou bien d'une injection de fluides dans la zone.

On peut par exemple surveiller l'évolution d'un gisement d'hydrocarbures en cours de production ou bien de sites géothermiques. Dans le cas de récupération assistée notamment, on cherche à balayer l'huile hors de la roche par des injections de fluides à des pressions et des températures pouvant être très différentes de celles du milieu. Les variations de contraintes qui en résultent peuvent induire une fracturation du milieu qui modifie les circulations des fluides à l'intérieur du gisement et qu'il est important de bien situer.

On connaît aussi des utilisations de gisements souterrains pour le stockage de fluides. Il peut s'agir par exemple de réservoirs de stockage en phase liquide ou gazeuse où il est possible de noter une certaine activité micro-sismique induite par des variations significatives du débit de gaz que l'on soutire de ces réservoirs ou que l'on y injecte.

Il peut s'agir aussi de zones-réservoirs ou cavités utilisées pour le stockage de déchets, qui doivent être surveillées dans le but de respecter l'environnement et de satisfaire aux réglementations de plus en plus contraignantes concernant la pollution. On peut utiliser un réservoir souterrain pour y injecter des fluides de forage plus ou moins chargés en particules solides, que la réglementation interdit de déverser après usage sur les sites de forages.

La température des fluides injectés est généralement très différente de celle du milieu à la profondeur où on les injecte, ce qui, si l'injection est massive, a pour effet de produire des contraintes thermiques génératrices de fractures avec pour conséquence une certaine activité sismique. La pression d'injection de ces boues peut également jouer pour créer des contraintes et entraîner des modifications plus ou moins importantes du milieu

L'activité sismique induite par les effets de la pression ou de la température peut révéler par exemple la formation de fractures ou la sollicitation de fractures déjà existantes. Elles contribuent à modifier les voies d'écoulement des fluides à l'intérieur du milieu, ou bien elles créent des voies d'évasion de fluides hors du gisement, des ruptures de confinement avec possible pollution des zones voisines, notamment vers un aquifère exploité pour l'alimentation en eau potable qu'il importe de déceler.

La surveillance des gisements servant au stockage de déchets nucléaires pour contrôler que les opérations d'injection, où l'élévation de la température locale qui résulte du stockage ne provoque des ruptures dans les couches assurant le confinement, est aussi d'une très grande importance.

Si les origines mécaniques d'une activité micro-sismique sont assez claires, l'analyse des phénomènes observés n'en reste pas moins délicate dans la plupart des cas, en raison d'un manque de moyens affectés à l'acquisition des résultats par exemple, des différentes échelles d'observation des phénomènes, de la connaissance limitée que l'on a du site investigué, etc. Le facteur temps est également très important. Certains événements succèdent de peu le phénomène déclencheur. C'est le cas par exemple pour les fracturations hydrauliques où la localisation des événements permet de cartographier tout ou partie de la fracture créée. D'autres produisent des effets différés, notamment en cas de production massive ou bien de transfert massif de fluide d'une zone du gisement vers une autre, avec un rayon d'influence souvent supérieur aux dimensions du réservoir.

Avec la surveillance micro-sismique encore appelée écoute passive, le but à terme pour l'exploitant, est d'interpréter très rapidement les données en relation avec les données classiques d'exploitation (pression, débit, température etc.) de sorte qu'il puisse prendre en compte la réponse mécanique du site dans le protocole d'exploitation afin de préserver la productivité du ou des puits voire du site. L'activité micro-sismique observée pouvant être associée à une dégradation mécanique du milieu pouvant engendrer des venues de solides, à l'ouverture de fractures pouvant mettre en communication le réservoir avec un aquifère ou à d'autres phénomènes d'origine thermo-poro-mécanique dont les conséquences peuvent induire une dégradation des performances des puits voire leur endommagement.

Dans le cas de la réalisation d'un échangeur constitué de deux puits que l'on met en communication par fracturation hydraulique, il est recommandé de fracturer le premier puits et de localiser le plan de la fracture créée avant de positionner le second puits. En effet, il est plus facile de recouper le plan fracture (sous réserve qu'il ait été bien cartographié) en forant le second puits que de fracturer les deux puits (après qu'ils aient été forés) pour les mettre en communication hydraulique. On peut notamment générer deux fractures qui soient parallèles mais non communicantes. Dans ce contexte, la localisation précise des microséismes induits lors de la fracturation du premier puits constitue donc une étape clé pour cartographier le plan de fracture et permettre le positionnement optimal du second puits afin de réaliser un échangeur efficace. Une application majeure dans ce contexte est la séquestration de $CO_2$ dans les veines de charbon simultanément à la désorption du méthane. Une autre application reste bien entendu la réalisation d'un doublet géothermique.

**État de la technique**

Le repérage et la localisation d'événements sismiques ou micro-sismiques dans un gisement peuvent se faire, de façon connue en descendant dans un puits au bout d'un câble, une sonde contenant un récepteur sismique triaxial que l'on plaque contre la paroi d'un puits. Par comparaison des signaux captés par les différents capteurs du récepteur sismique dans la sonde (analyse de la polarisation des ondes reçues), il est possible de déterminer la direction suivant laquelle l'événement sismique s'est produit, à condition que le milieu de propagation soit relativement homogène, voire de le localiser lorsque les signaux reçus contiennent une succession d'ondes de type P et d'ondes de type S.

Il existe en effet deux grands types d'ondes composant un signal sismique : les ondes longitudinales, dites de compression (ondes P), et les ondes transversales, dites de cisaillement (ondes S). Il existe deux types d'ondes S, polarisées perpendiculairement. Les adjectifs longitudinal et transversal, précisent la grandeur vectorielle caractéristique de l'onde par rapport à sa trajectoire (direction de propagation) : une onde longitudinale a sa grandeur caractéristique dans la direction de propagation, alors que l'onde transversale a sa grandeur caractéristique perpendiculaire à la direction de propagation. Dans le cas des ondes sismiques, la grandeur caractéristique est la direction de déplacement des particules. La polarisation précise l'évolution temporelle de l'orientation de cette grandeur vectorielle dans le plan perpendiculaire à la direction de propagation.

Par le brevet US 5 010 527, on connaît une méthode pour déterminer la profondeur d'une zone de fracturation hydraulique comportant l'utilisation d'un capteur à trois composantes que l'on plaque contre les parois du puits à différentes profondeurs et l'analyse comparative des signaux enregistrés pour sélectionner leurs causes.

Une telle méthode demande pour sa mise en oeuvre que le puits soit libéré le temps nécessaire pour y descendre la sonde jusqu'à la profondeur souhaitée, ce qui n'est pas compatible avec une surveillance à long terme.

Par les brevets FR 2 593 292, FR 2 681 373, FR 2 685 139, FR 2 703 470 notamment, on connaît différentes techniques pour surveiller l'évolution au cours du temps de réservoirs souterrains comportant l'utilisation de capteurs sismiques ou autres installés à demeure dans un ou plusieurs puits, sans perturber les opérations diverses (production, injection, interventions diverses menées par l'intermédiaire de ces puits). L'installation de ces capteurs à demeure dans des puits, permet d'exercer une surveillance sismique d'un réservoir dans le but de détecter différents phénomènes liés à son exploitation. Les capteurs sismiques permanents sont installés par exemple à l'extérieur d'un casing ou cuvelage que l'on descend dans le puits. Ils sont noyés dans le ciment qui est normalement injecté dans l'espace annulaire entre lui et le puits et qui assure leur bon couplage avec les formations environnantes. Les capteurs sismiques peuvent encore être fixés à l'extérieur d'une colonne d'exploitation qui est installée dans un puits lors des opérations de complétion. Ils sont associés à des moyens mobiles adaptés à les plaquer contre le casing du puits, et à des moyens de découplage pour filtrer les vibrations se propageant le long de la colonne d'exploitation.

L'enregistrement de l'activité micro-sismique, aussi appelée écoute passive ou surveillance micro-sismique, est favorisée par l'emploi de capteurs permanents de puits lorsque les phénomènes sont localisés à des profondeurs importantes (dès quelques centaines de mètres).

Par les brevets FR 2 703 457, FR 2 703 470, FR 2 728 973, on connaît des méthodes de surveillance active répétitive à long terme d'un réservoir par application d'ondes élastiques à une formation et acquisition des signaux-réponses renvoyés par la formation, ceci au moyen d'une installation permanente de moyens d'émission et de réception dans des puits ou au voisinage de la surface du sol. On réalise des traitements différentiels sur des acquisitions opérées dans des conditions identiques.

Par les brevets FR 2 688 896, FR 2 689 647 notamment, on connaît également des systèmes électroniques d'acquisition et de transmission étudiés spécialement pour collecter les signaux des capteurs permanents installés dans les puits extérieurement à des casings ou des colonnes d'exploitation, et les transmettre à un équipement d'enregistrement et de commande en surface, lors de campagnes de surveillance ou de sismique répétitive de longue durée.

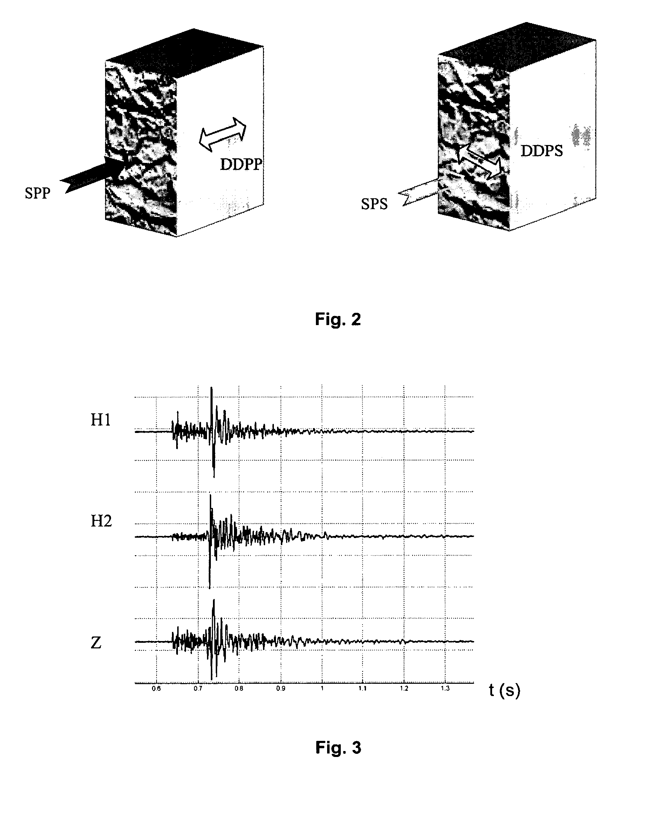

En terme de traitement du signal, acquis en vue d'en interpréter l'origine, si le milieu est homogène et isotrope, alors les axes de polarisation des ondes P et S sont orthogonaux, ceci de par leur nature. La figure 2 est une représentation schématique du mode de propagation et de polarisation des ondes de compression (P) et de cisaillement (S). La figure illustre les sens de propagation des ondes P (SPP) et des ondes S (SPS), ainsi que les directions de déplacement des particules pour les ondes P (DDPP), et pour les ondes S (DDPS). On parle d'axe de polarisation pour l'onde P, et de plan de polarisation pour les ondes S. En pratique, ceci n'est pas souvent le cas du fait des hétérogénéités dans les terrains et des variations, au cours du trajet, des propriétés des couches traversées. Il en résulte donc que les axes de polarisation observés ne sont pas tout à fait orthogonaux. En pratique, on accepte fréquemment des angles de 70° voire 60°.

Par ailleurs, dans un enregistrement d'un signal sismique correspondant à un microséisme par exemple (figure 3), l'onde S est, en général, d'amplitude plus forte que l'onde P, il est alors aisé, en comparant la polarisation du signal et son amplitude à un instant donné, avec ces mêmes paramètres en début de signal (supposé correspondre à l'arrivée de l'onde P), d'identifier automatiquement l'arrivée approximative de l'onde S :

Deflandre J.-P., Dubesset M., Identification of P/S wave successions for application in microseismicity, Pure and Applied GEOPHysics, Vol. 139, No. 3/4, 1992.
Mais cette évaluation reste le plus souvent grossière et requiert l'intervention d'un expert pour qu'une valeur précise du premier instant d'arrivée de l'onde S soit donnée.

La figure 3 représente le signal sismique correspondant à un événement microsismique enregistré sur un géophone triaxial définissant un trièdre direct dont les axes sont notés H1, H2 et Z. H1 et H2 correspondent aux composantes horizontales, Z correspond à la composante verticale ou plus exactement l'axe du puits qui peut être quelconque. On remarquera que l'onde P arrivant vers 0.64 s est principalement contenue dans le plan (H1, Z). L'onde S dont l'amplitude est, à peu prêt également répartie sur les trois composantes, arrive vers 0.72 s. Les amplitudes sont exprimées en m/s et sont au maximum de +/- 0.3 $10^{-7}$ m/s. Un offset est artificiellement introduit sur le graphe afin de pouvoir représenter les traces les unes au dessus des autres.

L'objet de l'invention est un procédé alternatif pour localiser automatiquement l'origine spatiale d'un événement sismique se produisant au sein d'une formation souterraine, à partir d'un enregistrement sismique multi-composantes. Le procédé se base notamment sur une détection automatique de l'arrivée d'onde de cisaillement.

**La méthode selon l'invention**

Ainsi, l'invention concerne un procédé pour localiser l'origine spatiale d'un événement sismique au sein d'une formation souterraine, cet événement produisant des émissions d'au moins une onde P de compression et d'au moins une onde S de cisaillement. Ce procédé comporte l'enregistrement des temps d'arrivée des ondes au moyen d'un capteur triaxial sous forme d'un signal sismique, sur lequel on détermine, au moyen d'une méthode d'analyse de signal, un instant $t_P$ de première arrivée de l'onde P au niveau du capteur triaxial et une période $T_P$ dudit signal. Le procédé comporte également les étapes suivantes :

a)- on détermine un instant $t_S$ de première arrivée de l'onde S au niveau du capteur triaxial au moyen des étapes suivantes :

- on définit une fenêtre temporelle d'analyse W, de largeur $T_P$*tr et positionnée sur ledit signal sismique à un instant $t_P$+td, où les facteurs tr et td sont choisis de façon à ce que l'énergie de l'onde S soit minimale au sein de ladite fenêtre W ;

- on détermine la direction de propagation de l'onde P au moyen d'une analyse de la polarisation du signal sur la fenêtre W ;

- on projette ledit signal sismique dans un nouveau repère défini par la direction de propagation de l'onde P et deux autres axes perpendiculaires Np et B ;

- on détecte de façon automatique ledit instant $t_S$ de première arrivée de l'onde S en appliquant, dans un plan défini par les axes Np et B, ladite méthode d'analyse de signal au signal sismique ainsi projeté ;

b)- on localise l'origine spatiale de l'événement sismique à partir de la direction de propagation de l'onde P et des temps d'arrivée des ondes de compression et de cisaillement.

Selon l'invention, on peut détecter le temps d'arrivée d'une onde de cisaillement (S) en calculant un taux de polarisation (τp) du signal dans une fenêtre glissante dans le signal et en définissant un seuil de taux de polarisation. On peut aussi détecter le temps d'arrivée d'une onde de cisaillement (S) en calculant un taux d'orthogonalité (τO) de l'axe de polarisation du signal dans la fenêtre glissante par rapport à l'axe de polarisation du signal dans la fenêtre à la position $t_P$+td, et en définissant un seuil de taux d'orthogonalité enfin, on peut exploiter une combinaison de ces seuils et de ces taux.

Comme méthode d'analyse de signal appliquées dans le plan défini par les axes Np et B, on peut utiliser la méthode suivant qui comporte les étapes suivantes:

- la détermination de la période $T_S$ correspondant à l'inverse de la fréquence dominante du spectre de fréquence d'une partie du signal sismique ;

- le codage du signal pour former un signal codé en binaire par référence à une première valeur-seuil dépendant du signal acquis ; et

- la formation d'un signal intégral (S) par sommation du signal codé en binaire sur une fenêtre glissante, de manière à déterminer une deuxième valeur-seuil, et le positionnement de l'instant significatif ($t_S$) sur le signal acquis par référence à un instant où le signal intégral correspondant atteint cette deuxième valeur-seuil.

Selon un mode de réalisation, on peut déterminer l'instant $t_P$ de première arrivée de l'onde P, au moyen des étapes suivantes :

- on détermine la direction de polarisation d'un bruit présent dans ledit signal sismique au moyen d'une analyse de la polarisation, et

- on projette ledit signal sismique dans un nouveau repère défini par ladite direction de polarisation du bruit et deux autres axes perpendiculaires Np' et B', puis

- on applique ladite méthode d'analyse du signal dans le plan défini par les axes Np' et B', pour détecter l'instant $t_P$ de première arrivée de l'onde P.
Enfin, selon un mode de réalisation on peut également déterminer l'origine spatiale en temps réel, et déclencher une alarme en fonction de l'origine spatiale de l'événement sismique.
D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 illustre les étapes du procédé selon l'invention.

- La figure 2 est une représentation schématique du mode de propagation et de polarisation des ondes de compression (P) et de cisaillement (S).

- La figure 3 représente le signal sismique correspondant à un événement microsismique enregistré sur un géophone triaxial définissant un trièdre direct dont les axes sont notés H1, H2 et Z.

- La figure 4 représente le même signal que celui de la figure 3 mais représenté dans le trièdre direct R, Np, B associé à l'onde P et déterminé sur la première période du signal (de longueur Tp) à partir du premier instant d'arrivée de l'onde P ($t_P$).

- La figure 5 représente le signal sismique dans le trièdre direct (R, Np, B=), ainsi que le taux de polarisation et le taux d'orthogonalité, ces paramètres déterminés lors de l'analyse en polarisation sont utilisés pour pointer l'arrivée de l'onde S. La détection n'est pas optimale l'arrivée de l'onde étant détectée avec environ une période de retard.

- La figure 6 représente le signal sismique dans le trièdre direct (R, Np, B), ainsi que le taux de polarisation et le taux d'orthogonalité. La détection automatique de l'onde S a été nettement améliorée grâce à la prise en compte de deux paramètres de reconditionnement.

- La figure 7A représente un signal de faible amplitude enregistré sur un capteur dont le niveau de bruit est élevé et surtout fortement polarisé.

- La figure 7B représente le signal de la figure 7A dans un trièdre direct (R', Np', B') relatif au bruit polarisé.

**Description détaillée de la méthode**

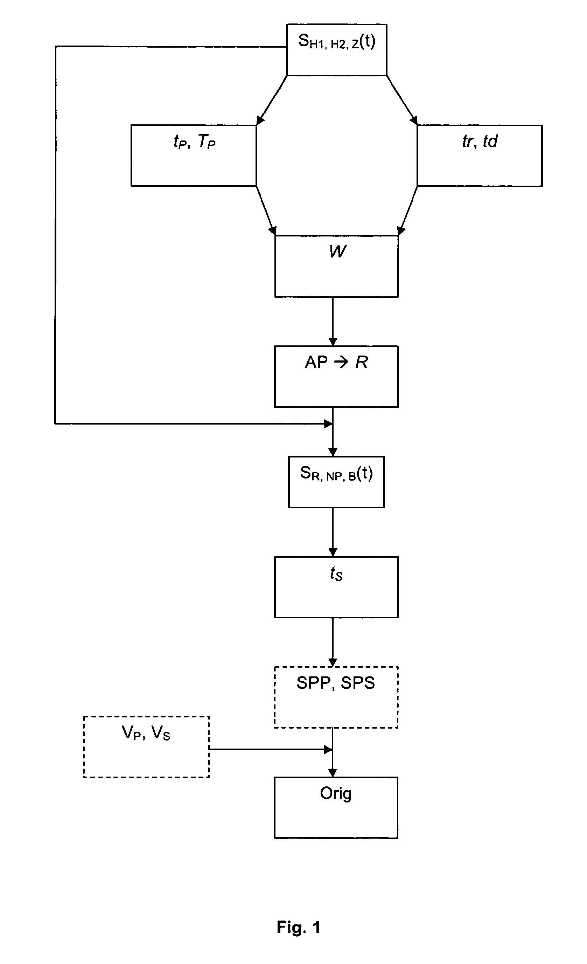

La figure 1 illustre les étapes du procédé selon l'invention. Pour déterminer l'origine spatiale d'un événement sismique (propagation d'ondes sismiques) se produisant au sein d'une formation souterraine, on enregistre le signal sismique correspondant à cet événement selon trois axes, au moyen d'un capteur triaxial. La figure 3 illustre l'enregistrement d'un signal sismique selon trois directions notées H1, H2 et Z. L'axe horizontal de cette figure représente le temps t(s).

L'origine spatiale se détermine en analysant ce signal sismique de façon à estimer la direction de propagation des ondes sismiques, le sens de propagation et la distance entre le capteur triaxial et l'origine.

La distance entre le capteur triaxial et l'origine peut être calculée par la formule suivante :

$$D = \frac{t_S - t_P}{\dfrac{1}{V_S} - \dfrac{1}{V_P}}$$

avec :

$t_S$ : le temps de première arrivée de l'onde S au niveau du capteur triaxial

$t_P$ : le temps de première arrivée de l'onde P au niveau du capteur triaxial

$V_S$ : la vitesse de propagation de l'onde S entre l'origine et le capteur triaxial

$V_P$ : la vitesse de propagation de l'onde P entre l'origine et le capteur triaxial

Le procédé comporte alors les étapes suivantes :

- on détermine de façon automatique l'instant $t_P$ d'arrivée de l'onde de compression (P) et on détermine la période $T_P$ du signal.

- on détermine de façon automatique l'instant $t_S$ d'arrivée de l'onde de cisaillement (S), au moyen des étapes suivantes :

  - on définit une fenêtre temporelle d'analyse W, au moyen de $T_P$, d'un facteur de décalage (td) et d'un facteur de redimensionnement (tr) ;

  - on détermine la direction de propagation de l'onde P au moyen d'une analyse de la polarisation du signal sur la fenêtre W ;

  - on projette le signal dans un nouveau repère défini par la direction de propagation de l'onde P et deux autres axes perpendiculaires Np et B ;

  - on détecte de façon automatique le temps d'arrivée d'une onde de cisaillement (S) au moyen d'une méthode d'analyse du signal dans le repère Np et B ;

- on localise l'origine spatiale de l'événement sismique à partir de la direction de propagation de l'onde P et des temps d'arrivée des ondes de compression et de cisaillement.

*Détermination de $t_P$*

Il existe de nombreuses techniques connues des spécialistes. De préférence on utilise la méthode décrite dans le brevet US 6 598 001. Il s'agit d'une méthode d'analyse de signaux pour pointer automatiquement sur chacun d'eux, un instant significatif ($t_P$). La méthode comporte les étapes suivantes :

- la détermination de la pseudo-période $T_P$ correspondant à l'inverse de la fréquence dominante du spectre de fréquence d'une partie de chaque signal acquis,

- le codage de chaque signal acquis pour former un signal codé en binaire par référence à une première valeur-seuil (TH1) dépendant du signal acquis,

- la formation pour chacun d'eux d'un signal intégral (S) par sommation du signal codé en binaire sur une fenêtre glissante, de manière à déterminer une deuxième valeur-seuil (TH2), et le positionnement de l'instant significatif ($t_P$) sur le signal acquis par référence à un instant où le signal intégral correspondant atteint cette deuxième valeur-seuil (TH2).

De façon plus détaillée, on détermine le temps de la première arrivée d'une onde de compression (P) en réalisant les étapes suivantes :

- Le signal est tout d'abord conditionné, la moyenne du signal est en général soustraite, puis le signal subit un premier filtrage pour supprimer efficacement le bruit impulsionnel, tout en conservant les détails importants du signal. Le signal se voit appliquer un filtre passe-bande de type Butterworth.

- Ensuite, la fréquence dominante $F_{DOM}$ du signal contenant l'onde P est calculée, elle permet de définir une pseudo-période $T_P$, qui est l'inverse de cette fréquence. Cette détermination se fait sur chaque voie du capteur triaxial (si elle diffère d'une voie à l'autre, une moyenne des fréquences dominantes est effectuée avant détermination de la pseudo-fréquence). On définit un paramètre WINDOW correspondant au nombre de pseudo-périodes sur lequel s'applique l'intégration du signal pour l'algorithme de détection.

- Une mesure de la moyenne M et de l'écart-type σ du signal correspondant au bruit est faite.

- Chaque échantillon du signal est ensuite analysé afin de définir la fonction binaire Ec. Cette fonction prend la valeur 0 aux temps où la valeur absolue de l'amplitude des échantillons ne dépasse pas un seuil fixé, fonction de σ. La fonction Ec prend la valeur 1 quand cette même valeur absolue dépasse ce seuil.

- La phase d'intégration du signal est alors engagée. Sur une fenêtre dont la largeur est définie par WINDOW, on calcule le nombre de fois où la fonction binaire Ec est différente de 0 et on applique ce nombre à l'échantillon central de la fenêtre, puis on fait glisser la fenêtre d'un échantillon et on réitère l'intégration. On obtient ainsi la fonction S. On détecte alors le premier point Fp de cette fonction S qui dépasse un seuil $S_M$/CSEUIL1 où $S_M$ est la valeur maximale de la fonction S et CSEUIL1 est un paramètre défini par l'utilisateur.

- Le dernier point de la fonction S avant Fp à avoir une valeur nulle est ensuite identifié. A partir de la position en temps correspondant à ce point, on reprend le signal temporel du fichier étudié et on cherche le premier point dont la valeur absolue de l'amplitude dépasse un second seuil fixé par l'utilisateur et plus grand que le premier seuil pour une bonne détection du début du signal. Une fois trouvé le premier point sur le signal temporel qui répond au second critère, on remonte le signal d'un quart de pseudo-période et on définit ainsi le temps $t_P$. Si ce temps est différent sur chaque voie (H1, H2 et Z), on prend le temps le plus petit pour être sûr de ne pas manquer l'arrivée de l'onde P.

_Détermination de $t_S$_

La détermination du temps de première arrivée de l'onde S au niveau du capteur triaxial repose sur une analyse en polarisation.

Pour ce faire, on définit une fenêtre temporelle d'analyse du signal. Cette fenêtre est notée W, elle est définie par un instant de début, ou position, sur le signal, et une longueur (intervalle de temps). Pour définir la position de la fenêtre W, on définit un facteur de décalage (td), utilisé pour avancer l'origine du début du calcul par rapport à $t_P$. Ainsi, la position de la fenêtre est : tp+td. Pour définir la longueur de la fenêtre, on définit un facteur de redimensionnement (tr), utilisé pour réduire ou étendre la longueur utile de la fenêtre W, fixée à $T_P$ par défaut. Ainsi, la longueur de la fenêtre est : $T_P$*tr.

Les paramètres de définition de la fenêtre W, tr et td, sont définis de façon à privilégier le début de l'arrivée de l'onde P, et à minimiser, jusqu'à l'annuler, celui de l'onde S dans l'analyse en polarisation. Il s'agit donc de minimiser l'énergie de l'onde S au sein de la fenêtre W, ceci afin de ne pas perturber la détermination de l'axe de polarisation de l'onde de compression. Ces paramètres td et tr (0 et 1 par défaut) sont donc définis pour réduire la largeur de la pseudo-période de l'onde P, ce qui revient à réduire la fenêtre de référence (W), et à la décaler vers l'amont du signal (td<0). De ce fait on donne plus de poids à l'onde P et on minimise, jusqu'à l'annuler, le poids de l'onde S dans le calcul des vecteurs propres relatifs à l'onde P.

De façon avantageuse, on ne descend pas en deçà d'une demi-période pour la longueur de la fenêtre de calcul. Toutefois, la définition des paramètres tr et td dépend du rapport signal sur bruit et de la pente du signal sismique au temps $t_P$.

De façon empirique, quelques tests suffisent à déterminer les valeurs optimales du décalage (paramètre td) et de la longueur de la fenêtre de calcul à considérer (paramètre tr). Le critère étant une bonne discrimination de l'arrivée de l'onde S.

A partir de cette fenêtre d'analyse, on détermine la direction de propagation de l'onde P au moyen d'une analyse de la polarisation du signal sur cette fenêtre W. L'analyse de la polarisation consiste à modéliser la trajectoire du vecteur vitesse de déplacement des particules au moyen d'un ellipsoïde, dont on étudie les propriétés de linéarité, planéité et d'ellipticité (Cliet C. and Dubesset M. (1988), « Polarization analysis in three-component seismics », Geophys. Trans., 34-1, 101-119.). Le calcul de la matrice de covariance permet également de déterminer les valeurs propres et les vecteurs propres associés définissant un trièdre direct noté (R, Np, B), où :

R : correspond à l'axe de polarisation de l'onde, donc pour une onde de compression, R correspond également à l'axe de propagation de cette onde.

Np et B : deux vecteurs (Normale propre et Bi-normale) orthogonaux entre eux et orthogonaux à R.

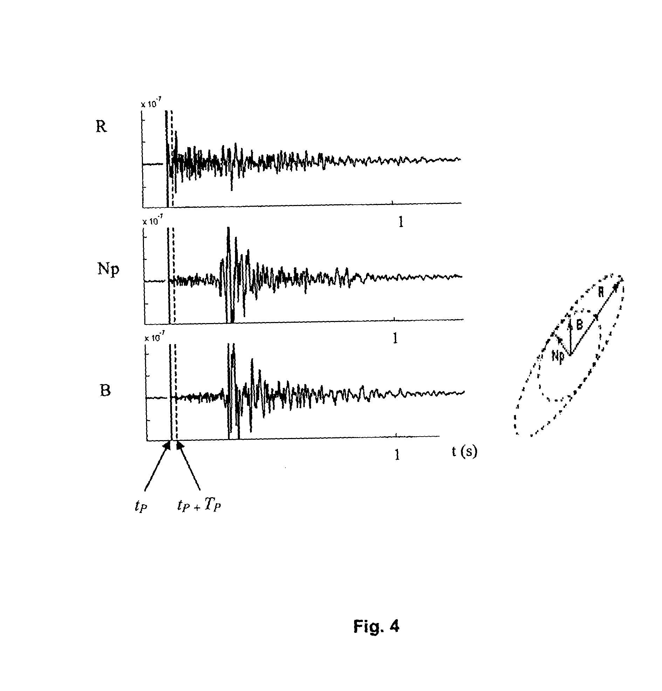

On projette alors le signal sismique dans ce nouveau repère défini par ces trois axes, au lieu des axes H1, H2 et Z. La figure 4 représente le même signal que celui de la figure 3, après avoir été légèrement filtré, mais cette fois-ci, il est représenté dans le trièdre direct (R, Np, B) relatif à l'onde P.

La détermination du temps de première arrivée de l'onde S au niveau du capteur triaxial se fait en appliquant la même technique que pour déterminer le temps de première arrivée de l'onde P, mais en appliquant la technique uniquement au signal projeté sur les axes Np et B :

- on détermine la période $T_S$ correspondant à l'inverse de la fréquence dominante du spectre de fréquence d'une partie du signal sismique ;

- on code le signal pour former un signal codé en binaire par référence à une première valeur-seuil dépendant du signal acquis ; et

- on forme un signal intégral (S) par sommation du signal codé en binaire sur une fenêtre glissante, de manière à déterminer une deuxième valeur-seuil, et le positionnement de l'instant significatif ($t_S$) sur le signal acquis par référence à un instant où le signal intégral correspondant atteint cette deuxième valeur-seuil.

En complément de la technique de pointé de l'arrivée de l'onde S, on peut améliorer cette technique en calculant le taux de polarisation du signal (τp), et éventuellement en calculant le taux d'orthogonalité (τo) entre l'axe de polarisation dans la fenêtre courante et celle de référence (la fenêtre définie sur l'intervalle de temps $[t_P ; t_P+Tp]$. On calcule les vecteurs de polarisation sur l'ensemble du signal en déplaçant une fenêtre de même largeur que la fenêtre de référence de point en point sur toute la longueur de l'enregistrement sismique.

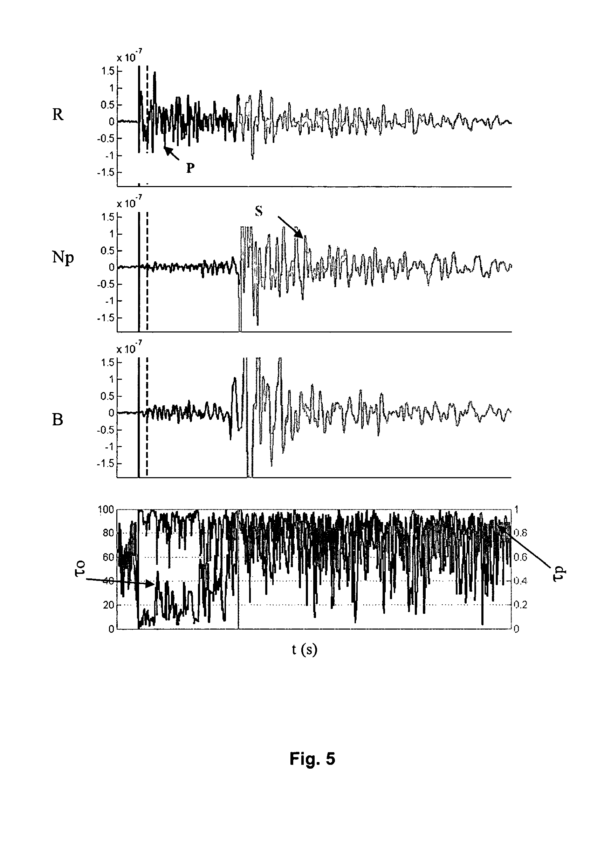

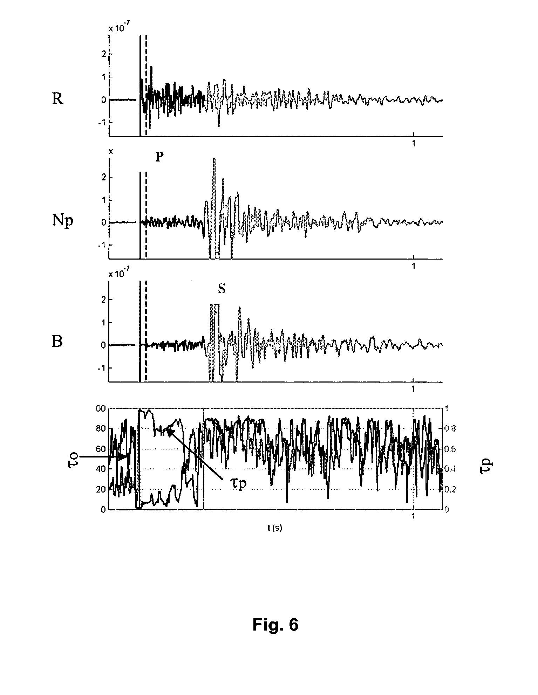

En définissant des valeurs seuils pour ces taux, on réduit l'imprécision du pointé de l'arrivée de l'onde S, comme l'illustre les figures 5 et 6. Un point fort du procédé est que le paramétrage est valable pour un grand nombre d'événements de même type, il n'est pas nécessaire de l'ajuster pour chaque événement.

Pour illustrer la nécessité de définir une telle fenêtre on compare les figures 4, 5 et 6. Selon l'exemple de la figure 4, l'onde de compression P est bien polarisée, c'est-à-dire que le taux de polarisation τp est élevé (proche de 1), et l'onde de cisaillement S arrive après la première période de l'onde P. Dans ce cas de figure, l'onde S est portée par les deux autres composantes (Np et B). La définition de la fenêtre W, avec td=0 et tr=1, conduit à la définition d'un trièdre (R, Np et B) pertinent, permettant de bien dissocier les ondes P et S, la première étant portée uniquement par le premier vecteur propre (R) et la seconde par les deux autres (Np, B).

Pour détecter le temps de première arrivée de l'onde S il est suggéré d'utiliser une analyse en fréquence basée sur les propriétés attendues d'une succession P/S caractéristique d'un mécanisme de double-couple. On s'attend notamment à ce que le rapport des fréquences caractéristiques de chacune des ondes soit de l'ordre du rapport des vitesses de propagation de ces mêmes ondes dans le milieu où se trouve le point d'émission (source microsismique ou sismique).

En pratique, ceci n'est pas souvent observé c $_{temps (s)}$ le cas présent (figure 4) où cette technique n'a pas permis de déterminer l'arrivee de ronde S : celle-ci est détectée bien après son arrivée lorsque le bruit devient basse fréquence vers t=2,54 s (non représenté sur la figure). Ceci peut être dû aux propriétés dispersives des couches de terrain traversées par les ondes élastiques de l'effet de filtre "passe-bas" qui en résulte. Le contenu fréquentiel des deux ondes au point d'enregistrement ne correspond plus à celui au point d'émission. L'approche en fréquence pour détecter l'arrivée de l'onde S est donc mise en défaut et n'est pas utilisable. Il devient alors indispensable d'exploiter les résultats de l'analyse en polarisation en prenant en compte les taux de polarisation, d'orthogonalité et en jouant sur les paramètres du calcul.

Selon l'exemple de la figure 5, l'analyse en polarisation permet de bien identifier le trièdre (R, Np et B), et conduit à un pointé automatique de l'onde S en exploitant les paramètres de polarisation ($\tau p$) et d'orthogonalité ($\tau o$), dont l'évolution en fonction du temps est indiquée au bas de la figure 5. On constatera qu'il y est, dans ce cas précis, difficile de bien déterminer $t_S$. En effet, il n'y a pas de rupture nette dans les courbes de ces taux, permettant de définir des seuils précis. De ce fait, l'arrivée de l'onde S est détectée avec un retard de l'ordre d'une période.

Selon l'exemple de la figure 6, le résultat est très nettement amélioré en introduisant un décalage ($t_d$) sur la position de la fenêtre de référence W et en en réduisant la largeur d'un facteur $t_r$, ce qui revient à privilégier dans le calcul le poids de l'onde P en considérant le tout début de l'arrivée P, et à considérer les paramètres associés à cette fenêtre réduite dans le calcul de l'orthogonalité. La figure 6 montre également que le taux de polarisation ($\tau p$) croît fortement au passage du niveau de bruit à l'onde P, tout comme le taux d'orthogonalité ($\tau o$) croît au passage de l'onde P à l'arrivée de l'onde S. Ce qui n'était pas le cas sur la figure 5, d'où la difficulté à déterminer l'arrivée de l'onde S avec précision dans ce premier calcul.

Les figures et résultats qui résultent des pointés ont été obtenus avec les paramétrages suivants :

Tableau 1 : valeurs des facteurs de détection (Nu : "Non Utilisé").

| Figure | $t_P$ (s) | $\tau p$ | $\tau o$ | Se (m/s)$^2$ | $t_d$ | $t_r$ | ts (s) |
|--------|-----------|----------|----------|--------------|-------|-------|--------|
| 4 | 0.636 | Nu | Nu | Nu | Nu | Nu | 2,54 |
| 5 | 0.636 | 65 | 0.6 | 10.95 | 0 | 1 | 0.727 |
| 6 | 0.636 | 65 | 0.6 | 10.95 | 0.4 | 0.9 | 0.721 |

Sur ces figures, les traits verticaux délimitent la fenêtre de référence (W) pour le calcul des paramètres de polarisation.

L'onde P est représentée en noir, l'onde S en gris. Le taux de polarisation ($\tau p$) représenté au bas des figures 5 et 6 est en gris, et le taux d'orthogonalité ($\tau o$) est représenté en noir.

Selon un autre cas de figure, l'onde de compression est bien polarisée mais l'onde de cisaillement arrive avant que la première période du signal de l'onde P ne soit achevée. L'identification de l'onde S est alors très délicate.

Dans ce cas, le paramétrage (seuil Se) utilisé pour la détection de l'onde P est conservé pour la détection de l'arrivée de l'onde S.

*Vitesses des ondes S et P : $V_S$ et $V_P$*

Le modèle de vitesse en ondes P et S est une donnée d'entrée du problème, il est en général fourni par l'opérateur ou gérant du site. Ce modèle est bien souvent établi à partir d'acquisitions sismiques de surface, en puits ou au moyen d'enregistrements diagraphiques soniques en ondes P et S. On peut également prendre en compte des mesures acoustiques sur carottes de manière à conforter les rapports de vitesse en ondes P et S. Des tirs de calibration sont aussi utilisés pour d'une part orienter in situ les outils 3-composantes et caler localement les modèles de vitesse en onde P.

Connaissant $t_P$, $t_S$, $V_P$ et $V_S$, on peut calculer la distance entre le capteur triaxial et l'origine par la formule suivante :

$$D = \frac{t_S - t_P}{\dfrac{1}{V_S} - \dfrac{1}{V_P}}$$

Pour connaître le sens et donc n'avoir qu'une seule solution en terme de localisation, il faut soit connaître la nature du mouvement (phénomène compressif dans le cas d'un tir d'explosif), soit disposer d'un autre capteur ayant enregistré un signal équivalent à un autre endroit de l'espace de manière à lever l'ambiguïté.

Enfin, connaissant la direction de propagation des ondes sismiques, le sens de propagation et la distance entre le capteur triaxial et l'origine, on localise l'origine spatiale de l'événement sismique à partir de la direction de propagation de l'onde P et des temps d'arrivée des ondes de compression et de cisaillement (le modèle de vitesse en onde P et en onde S)

En fonction du nombre de capteurs ayant acquis le signal, une ou plusieurs techniques de localisation sont exploitables, et on réalise une comparaison pour obtenir la localisation la plus fiable possible : exploitation des successions P/S et de la direction ou sens de propagation de l'onde P lorsqu'on a moins de trois capteurs ayant été atteints par les ondes P et S émises à la source, localisation complémentaire en onde P et en onde S lorsqu'on a au moins quatre capteurs ayant été atteints par ces ondes sismiques. Ces comparaisons sont par ailleurs utiles pour estimer l'incertitude de localisation.

**Variantes**

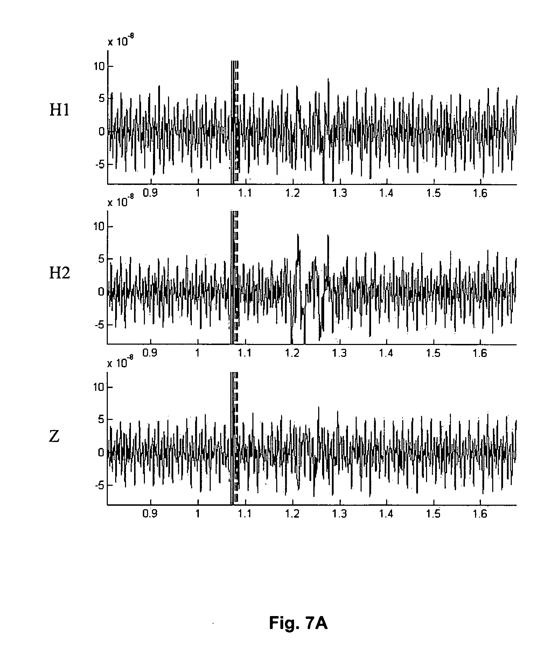

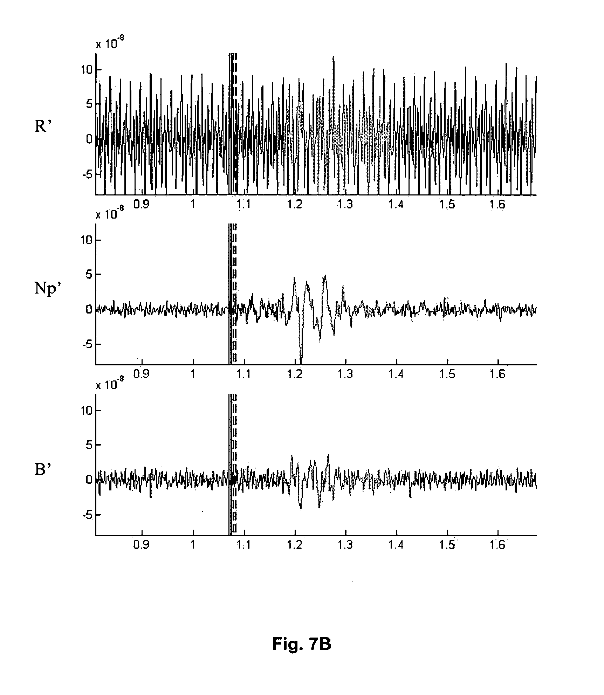

Si le rapport signal sur bruit du signal sismique est très faible et que le bruit est polarisé (figure 7A), l'analyse en polarisation permet de reporter le bruit sur le vecteur propre qui lui correspond (figure 7B). Le calcul est optimal en effectuant le calcul dans le bruit en amont du signal. Ceci permet de visualiser le signal dans un plan (Np', B') et de détecter alors avec précision l'instant de première arrivée de l'onde P voire celui de l'onde S en effectuant une analyse temps fréquence, en appliquant la technique décrite précédemment pour la détection de l'onde P, voire en s'aidant d'un filtre en polarisation pour soustraire le bruit.

On peut considérer le même niveau de bruit que celui évalué en amont de l'arrivée de l'onde P. On peut également réévaluer le niveau de bruit résiduel dans le plan (Np', B'), cette valeur servant alors de référence à la détection des deux ondes dans ce plan. Cette variante permet de déterminer avec précision des temps d'arrivée P et S dans un cas particulier et difficile. Elle ne permet pas de connaître proprement la direction de propagation de l'onde P mais une estimation reste possible.

**Applications**

Le procédé selon l'invention trouve de nombreuses applications :

- Application à la cartographie en temps réel d'une fracture hydraulique.

- Application à l'identification d'une interface présentant des propriétés particulières propices à la réfraction des ondes et aux changements de modes (conversion d'une onde P en onde S par exemple).

- Application à l'amélioration des modèles de vitesse en P en S pour un ensemble de formation géologique voire pour des milieux quelconques au sein desquels de telles ondes ou les ondes de conversion associées peuvent se propager.

- Application à la caractérisation dynamique des propriétés des terrains en terme de propagation des ondes de compression et de cisaillement, évaluation des variations induites par les changements de l'état de contraintes au cours du temps sur les vitesses de propagation des ondes.

- Application à une caractérisation haute résolution des vitesses au sein d'un milieu, le pouvoir de séparation des ondes étant accru par la technique proposée.

- Application à la surveillance d'un ouvrage souterrain.

- Activation d'alarmes sur des seuils d'amplitude et/ou de distance entre le lieu d'occurrence du phénomène et le point de mesure qui peut être le point stratégique à surveiller.

- Estimation du risque associé pour les personnes et les biens.

Dans les domaines de la production pétrolière et du stockage souterrain de gaz par exemple, la modification de la pression de pore des couches réservoirs modifie le champ de contraintes en tout point de l'espace, ce qui peut induire une activité microsismique voire sismique plus ou moins importante. Afin de caractériser le comportement dynamique du milieu, il est nécessaire d'enregistrer cette activité microsismique et de localiser les zones d'émission.

Le procédé selon l'invention permet un gain de temps très important tout en obtenant une évaluation précise de l'instant d'arrivée de l'onde S. Il en résulte la possibilité de localiser automatiquement des microséismes en utilisant une ou plusieurs techniques de localisation (lancé de rais, triangulation ...). Dans un cas précis, ce procédé a permis d'augmenter de 20% le nombre d'événements localisés automatiquement ce qui représente des milliers d'événements.

De plus, le procédé améliore la qualité d'une localisation automatique basée sur une technique de triangulation sur les premières arrivées (relatives à l'enregistrement de l'onde P sur plusieurs capteurs) et de la rendre ainsi plus robuste en prenant en considération dans le traitement l'arrivée de l'onde S également. On triangule en onde S en plus de trianguler sur l'onde P ce qui donne plus de poids au résultat.

Cette technique d'identification de la première arrivée de l'onde S complète les techniques déjà mises au point pour identifier l'instant d'arrivée de l'onde P et permet de caler plus finement le modèle de terrain du milieu en déterminant le point source par inversion, et en en déduisant exactement les temps de vol en P et en S et, par conséquent, les vitesses de propagation des ondes P et S et leur rapport.

Cette technique a été appliquée automatiquement sur des milliers de signaux, présentant un contenu relativement haute fréquence pour des microséismes (allant de 150 à 220 Hz), ce qui a permis de les localiser aux abords du puits à des distances inférieures à 30 m, soit de l'ordre ou un peu plus, que la longueur d'onde des signaux eux-mêmes. Ceci représente un gain de temps conséquent pour un temps de paramétrage initial de l'outil de détection très rapide, quelques tests suffisant à déterminer les valeurs optimales du décalage (paramètre td) et de la largeur de la fenêtre de calcul à considérer (coefficient tr).

**Revendications**

1. Procédé pour localiser l'origine spatiale d'un événement sismique au sein d'une formation souterraine, ledit événement produisant des émissions d'au moins une onde P de compression et d'au moins une onde S de cisaillement, dans lequel on enregistre des temps d'arrivée desdites ondes au moyen d'un capteur triaxial sous forme d'un signal sismique, sur lequel on détermine, au moyen d'une méthode d'analyse de signal, un instant $t_P$ de première arrivée de l'onde P au niveau du capteur triaxial et une période $T_P$ dudit signal, **caractérisé en ce que :**

   a)- on détermine un instant $t_S$ de première arrivée de l'onde S au niveau du capteur triaxial au moyen des étapes suivantes :

   - on définit une fenêtre temporelle d'analyse $W$, de largueur $T_P*tr$ et positionnée sur ledit signal sismique à un instant $t_P+td$, où les facteurs $tr$ et $td$ sont choisis de façon à ce que l'énergie de l'onde S soit minimale au sein de ladite fenêtre W ;
   - on détermine la direction de propagation de l'onde P au moyen d'une analyse de la polarisation du signal sur la fenêtre $W$ ;
   - on projette ledit signal sismique dans un nouveau repère défini par la direction de propagation de l'onde P et deux autres axes perpendiculaires Np et B ;
   - on détecte de façon automatique ledit instant $t_S$ de première arrivée de l'onde S en appliquant, dans un plan défini par les axes Np et B, ladite méthode d'analyse de signal au signal sismique ainsi projeté ;

   b)- on localise l'origine spatiale de l'événement sismique à partir de la direction de propagation de l'onde P et des temps d'arrivée des ondes de compression et de cisaillement.

2. Procédé selon la revendication 1, dans lequel on détecte le temps d'arrivée d'une onde de cisaillement (S) en calculant un taux de polarisation ($\tau$p) du signal dans une fenêtre glissante dans le signal et en définissant un seuil de taux de polarisation.

3. Procédé selon l'une des revendications précédentes, dans lequel on détecte le temps d'arrivée d'une onde de cisaillement (S) en calculant un taux d'orthogonalité ($\tau$o) de l'axe de polarisation du signal dans la fenêtre glissante par rapport à l'axe de polarisation du signal dans la fenêtre à la position $t_P$+td, et en définissant un seuil de taux d'orthogonalité.

4. Procédé selon les revendications 2 et 3, dans lequel on exploite une combinaison desdits seuils et desdits taux.

5. Procédé selon l'une des revendications précédentes, dans lequel ladite méthode d'analyse de signal appliquées dans le plan défini par les axes Np et B comporte les étapes suivantes:

   - la détermination de la période $T_S$ correspondant à l'inverse de la fréquence dominante du spectre de fréquence d'une partie du signal sismique ;
   - le codage du signal pour former un signal codé en binaire par référence à une première valeur-seuil dépendant du signal acquis ; et
   - la formation d'un signal intégral (S) par sommation du signal codé en binaire sur une fenêtre glissante, de manière à déterminer une deuxième valeur-seuil, et le positionnement de l'instant significatif ($t_S$) sur le signal acquis par référence à un instant où le signal intégral correspondant atteint cette deuxième valeur-seuil.

6. Procédé selon l'une des revendications précédentes, dans lequel on détermine l'instant $t_P$ de première arrivée de l'onde P, au moyen des étapes suivantes :

- on détermine la direction de polarisation d'un bruit présent dans ledit signal sismique au moyen d'une analyse de la polarisation, et
- on projette ledit signal sismique dans un nouveau repère défini par ladite direction de polarisation du bruit et deux autres axes perpendiculaires Np' et B', puis
- on applique ladite méthode d'analyse du signal dans le plan défini par les axes Np' et B', pour détecter l'instant $t_P$ de première arrivée de l'onde P.

7. Procédé selon l'une des revendications précédentes, dans lequel la détermination de l'origine spatiale est réalisée en temps réel.

8. Procédé selon la revendication 7, dans lequel on déclenche une alarme en fonction de l'origine spatiale de l'événement sismique.

**Fig. 1**

**Fig. 2**

**Fig. 3**

**Fig. 4**

**Fig. 5**

**Fig. 6**

**Fig. 7A**

**Fig. 7B**

## RÉFÉRENCES CITÉES DANS LA DESCRIPTION

**Documents brevets cités dans la description**

- US 5010527 A
- FR 2593292
- FR 2681373
- FR 2685139
- FR 2703470
- FR 2703457
- FR 2728973
- FR 2688896
- FR 2689647
- US 6598001 B

**Littérature non-brevet citée dans la description**

- **Deflandre J.-P. ; Dubesset M.** Identification of P/S wave successions for application in microseismicity. *Pure and Applied GEOPHysics,* 1992, vol. 139 (3/4
- **Cliet C. ; Dubesset M.** Polarization analysis in three-component seismics. *Geophys. Trans.,* 1988, vol. 34-1, 101-119